# EUROPEAN PATENT SPECIFICATION

(11) **EP 2 186 728 B1**
(45) Date of publication and mention of the grant of the patent: **18.04.2012**
(21) Application number: 08380317.1
(22) Date of filing: 14.11.2008
(51) Int. Cl.: B64C 39/02, B64F 1/02

(54) **Unmanned air vehicle recovery system**
Bergungssystem für ein unbemanntes Luftfahrzeug
Système de récupération de véhicule aérien sans pilote

(43) Date of publication of application: 19.05.2010
(73) Proprietor: The Boeing Company, Chicago, IL 60606-1596 (US)
(72) Inventor: Gomez-Ledesma, Ramon, 28022 Madrid (ES); Kawiecki, Grzegorz, 28292 Madrid (ES)
(74) Representative: Tucker, Nigel P.

(56) References cited:
- GB-A- 2 231 011
- US-A- 4 311 290
- US-A1- 2007 158 498
- US-A1- 2008 156 932

## Description

### Field of the Invention

The present invention relates to a recovery system for unmanned air vehicles, namely a system for recovering such air vehicles from flight.

### Background to the Invention

Fixed-wing unmanned air vehicles (UAV) may be recovered from flight in a number of ways.

One way is to fly a conventional landing as is performed with manned air vehicles. However, to fly such an approach requires a large open space of sufficient quality to provide a suitable landing strip.

Alternatively, recovery may be effected by deploying a parachute from the UAV. However, the inclusion of the parachute and its deployment mechanism in the UAV has weight and payload penalties. UAVs provided with a parachute recovery system must be sufficiently robust to withstand the repeated controlled impacts with the ground, or must have still further equipment such as airbags. Also, the very nature of parachute flight means that predicting the exact landing location of the UAV is impossible.

Another system sees UAVs adapted to undergo a controlled break-up upon impact with the ground. Clearly, such a system is complex and difficult to implement successfully. Such a system is also particularly prone to causing damage to the UAV.

Nets have also been used to recover UAVs. A large net is required to account for uncertainties in the UAV trajectory. In addition, the enveloping nature of the net can lead to damage to fragile parts of the UAV such as antennas.

A further system is described in US Patent Application 2004/0232282. The system comprises a line suspended vertically from a ship's boom or the like. A fixed-wing UAV is flown into the line, with the line preferably striking the leading edge of a wing away from the wing tip. The forward motion of the UAV sees the line dragged along the leading edge of the wing where it is captured by a cleat provided at the wing tip. While such a system has found success with UAVs having swept wings, this system is generally ineffective for UAVs having unswept wings. Also, precision flying is required as there is little margin for error: the margin of error is merely the wingspan of the UAV, as otherwise the required overlap of line and wing is not achieved.

Other UAV capture systems are described in US 4,311,290 (preamble of claim 1 and 9), US 2008/0156932 and US 2007/0158498.

### Summary of the Invention

Against this background, and from a first aspect, the present invention resides in a system for recovering an unmanned air vehicle from flight according to claim 1.

The system comprises an unmanned air vehicle and recovery apparatus. The air vehicle comprises first coupling means suspended beneath the air vehicle, and the recovery apparatus comprises second coupling means extending at an angle to the vertical that is complementary to the first coupling means thereby allowing for engagement between the air vehicle and the recovery apparatus via the first and second coupling means. The second coupling means is rotatably mounted so as to allow rotation about a substantially vertical axis upon engagement of the air vehicle and the recovery apparatus.

The first coupling means is anchored to the body of the air vehicle at a hard point, and is further attached to the body of the air vehicle by a frangible member.

Allowing rotation of the second coupling means is advantageous as it assists in bringing the UAV to a controlled stop. As the first and second coupling means engage, the second coupling means rotate thereby causing the UAV to spiral to a gradual halt. This is in contrast to some prior art system where the UAV is brought to a sudden stop. The present invention also represents an advance over the suspended line and cleat system described above. Although the line in the prior art is flexible and gives a little on impact of the UAV wing, the UAV is brought to a halt more quickly that in the present invention. This is because the rotation of the recovery apparatus of the present invention allows the UAV to spiral to a halt.

Moreover, a further advantage is obtained over the suspended line and cleat system. As described above, the prior art system relies on precision flying of the UAV as the UAV must be aligned to the suspended line to an accuracy no greater that the UAV wingspan. Otherwise, the line and the UAV miss. There is no such limitation with the present invention: the accuracy is determined by the width of the second coupling means. Optionally, the width of the second coupling means may be adjustable, thereby allowing the system to be adaptable to the prevailing conditions. For example, in gusting winds the width of the second coupling means may be increased to account for the greater uncertainty in the path of the UAV.

A further advantage is that the system of the present invention works for any configuration of fixed-wing UAVs, rather than being specific to swept-wing designs. In fact, the system may be used with other UAVs like rotorcraft, for example in situations where a lack of a suitable landing site prevents a hover landing.

The second coupling means may comprise an arm that, optionally, extends from a mast. The arm may be substantially horizontal. The mast may be substantially vertical. The arm may rotate about the longitudinal axis of the mast. The mast and arm may be joined by a rotatable joint such that the arm rotates relative to the fixed mast. Alternatively, the mast and arm may be fixed together such that the mast and arm rotate together. The arm may be split into two by a rotatable joint. The rotatable joint may allow rotation about a substantially vertical axis.

The first coupling means may engage directly with the arm. Alternatively, the first coupling means may engage with a cable, a rope, a line, a chain or a net. Thus, the second coupling means may correspond to any of these structures. The second coupling means may comprise both an arm and any of these structures, e.g. a net suspended from an arm.

Preferably, the first coupling means provided on the UAV is a hook. The hook may attach directly to the UAV, but is preferably suspended on a line. Any form of hook may be used, such as a grappling hook. Thus the hook engages with the second coupling means as the UAV flies past the recovery apparatus. The line may take any number of forms, e.g. rope, cable, chain or belt. In fact, the above arrangements may be reversed to an extent, with the first coupling means comprising a chain and the second coupling means comprising a series of hooks, optionally provided on an arm.

The second coupling means may be arranged to rotate freely, i.e. to continue to rotate until brought to a gradual halt by friction within the recovery apparatus. Alternatively, the recovery apparatus may comprise retarding means operable to bring rotation of the second coupling means smoothly to a stop. For example, a brake may be used with a rotary joint to bring rotation of the second coupling means to a controlled stop.

To provide greater flexibility, the second coupling means may be arranged to be rotated about the substantially vertical axis prior to engagement with the UAV thereby allowing the orientation of the second coupling means to be set relative to the approaching UAV. Thus the UAV may be flown at any direction towards the recovery apparatus and the second coupling means set accordingly. Typically, the UAV will be flown into the wind, and so the recovery apparatus may be easily adjusted if there is a change in wind direction.

Adjustment of both the orientation and the width of the second coupling means has been described above. The width adjustment may be effected by using a telescopic arm as the second coupling means. Alternatively, the length of a line, cable or rope may be varied by adjusting the separation of the members to which that line, cable or rope is attached. In addition, the height of the second coupling means may be adjustable. For example, where mast and arm are used, the mast may be telescopic. Where a line, cable or rope is used, the members to which it is attached may be telescopic. Optionally, the line, cable or rope is attached via a reel that allows the length of the second coupling means to be varied as the members are adjusted, either their length or their separation.

Optionally, the length of the first coupling means is adjustable. For example, the first coupling means may comprise a line that may be paid out from the UAV. The line may, for example, be provided on a reel. The line is anchored to the body of the UAV at a hard point, and is further attached to the body of the UAV by a frangible member. The frangible member may be a loop. The frangible member is arranged to break when the first and second coupling means engage. This ensures that the bulk of the force is applied to the UAV via the hard point. Thus a well-defined load path may be established. Such an arrangement is beneficial as the frangible member may be provided on the body of the air vehicle at, or as close as possible to, the centre of gravity of the air vehicle.
Thus, the line may hang from the centre of gravity increasing stability of the UAV during flight. Furthermore, should there be no hard point located close to the centre of gravity, this arrangement provides the best of both worlds.

A recovery apparatus for recovering an unmanned air vehicle from flight is described comprising coupling means for coupling with an unmanned air vehicle extending at an angle to the vertical; and wherein the coupling means is rotatably mounted so as to allow rotation about a substantially vertical axis. As will be appreciated, advantages are shared with the system described above and preferred features described above also apply.

For example, the second coupling means may extend substantially horizontally. The second coupling means may comprise an arm that, optionally, extends from a mast. The mast be substantially vertical. The arm may rotate about the longitudinal axis of the mast. The mast and arm may be joined by a rotatable joint such that the arm rotates relative to the fixed mast. Alternatively, the mast and arm may be fixed together such that the mast and arm rotate together. The arm may be split into two by a rotatable joint. The rotatable joint may allow rotation about a substantially vertical axis.

The first coupling means may engage directly with the arm. Alternatively, the first coupling means may engage with a cable, a rope, a line, a chain or a net. Thus, the second coupling means may correspond to any of these structures. The second coupling means may comprise both an arm and any of these structures, e.g. a net suspended from an arm. The second coupling means comprising a series of hooks, optionally provided on an arm.

The second coupling means may be arranged freely to rotate, i.e. to continue to rotate until brought to a gradual halt by friction within the recovery apparatus. Alternatively, the recovery apparatus may comprise retarding means operable to bring rotation of the arm smoothly to a stop. For example, a brake may be used with a rotary joint to bring rotation of the second coupling means to a controlled stop.

To provide greater flexibility, the second coupling means may be arranged to be rotated about the substantially vertical axis prior to engagement with the UAV thereby allowing the orientation of the second coupling means to be set relative to the approaching UAV.

Adjustment of both the orientation and the width of the second coupling means has been described above. The width adjustment may be effected by using a telescopic arm as the second coupling means. Alternatively, the length of a line, cable or rope may be varied by adjusting the separation of the members to which that line, cable or rope is attached. In addition, the height of the second coupling means may be adjustable. For example, where mast and arm are used, the mast may be telescopic. Where a line, cable or rope is used, the members to which it is attached may be telescopic. Optionally, the line, cable or rope is attached via a reel that allows the length of the second coupling means to be varied as the members are adjusted, either their length or their separation.

From a second aspect, the present invention resides in a method of recovering an unmanned air vehicle from flight according to claim 9. The method comprises flying the air vehicle towards recovery equipment, wherein the air vehicle has suspended therefrom first engagement means and the recovery equipment includes second engagement means that extend substantially horizontally. The method further comprises flying the air vehicle over the recovery equipment such that the first engagement means engage with the second engagement means thereby causing the second engagement means to spin about a substantially vertical axis, thereby bringing the UAV air vehicle to a gradual halt. The first engagement means are anchored to the body of the air vehicle at a hard point and are further attached to the body of the air vehicle by a frangible member. The frangible member breaks when the first engagement means engage with the second engagement means. The second engagement means may be stationary as the UAV approaches, or they may be rotated. The first and second engagement means may engage as the second engagement means are rotating towards the UAV as it approaches or as the second coupling means rotate with the UAV to catch up and pass the UAV. As will be appreciated, advantages are shared with the system described above.

### Brief Description of the Drawings

In order that the present invention may be more readily understood, preferred embodiments will now be described, by way of example only, with reference to the following drawings, in which:
Figures 1a and 1b are perspective views of a UAV for use in an embodiment of the present invention, Figure 1a showing a hook in a stowed position and Figure 1b showing the hook in a deployed position;
Figure 2 is a perspective view of UAV recovery equipment for use in an embodiment of the present invention;
Figures 3a and 3b show a recovery system comprising the recovery equipment of Figure 2 capturing the UAV of Figure 1;
Figure 4 is a perspective view of recovery equipment for use in a further embodiment of the present invention;
Figure 5 is a perspective view of recovery equipment for use in a further embodiment of the present invention;
Figure 6 shows another system for UAV recovery for use in a yet further embodiment of the present invention;
Figure 7 shows a yet further system for UAV recovery; and
Figures 8a to 8c show the system of Figure 7 in operation.

### Detailed Description of the Invention

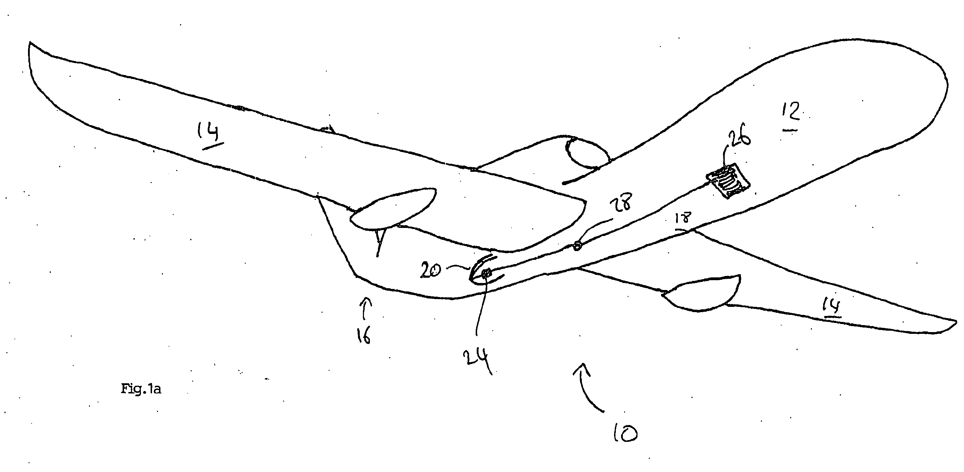

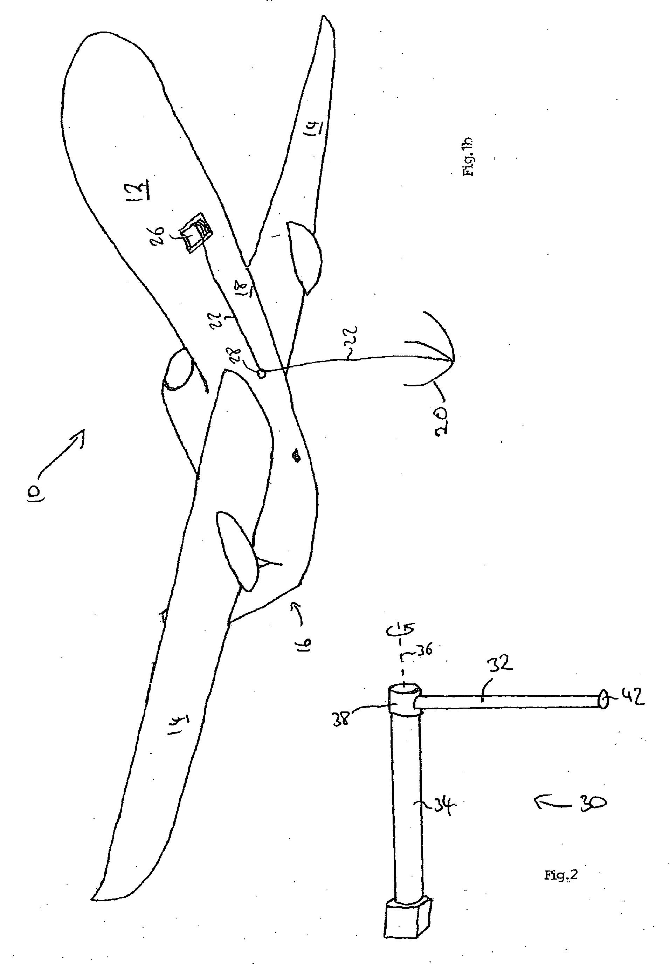

A UAV 10 configured for use as part of a recovery system according to an embodiment of the present invention is shown in Figures 1a and 1b. A general example of a fixed-wing UAV is provided, although it will be appreciated that the present invention may be applied to an endless variety of UAV designs.

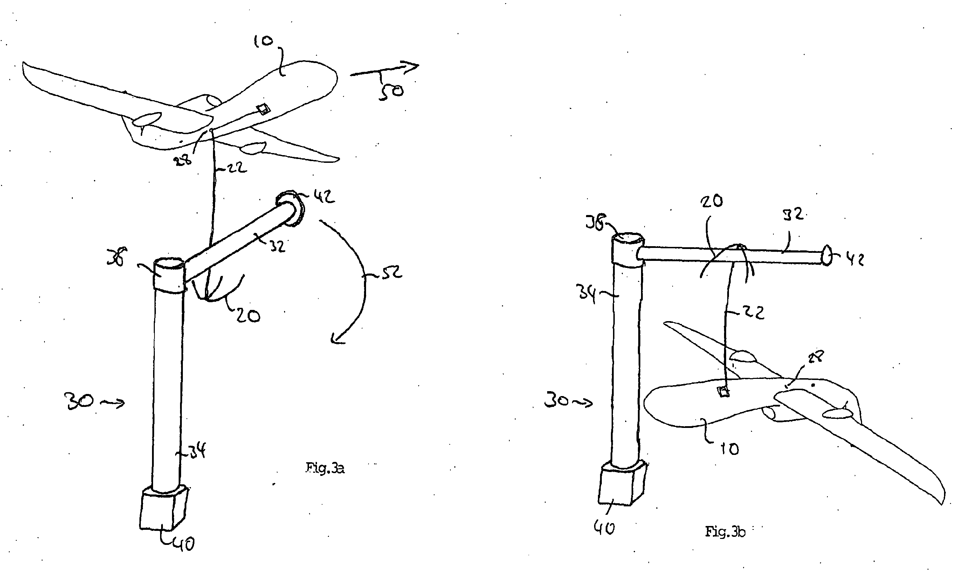

The UAV 10 of Figures 1a and 1b comprises a fuselage 12, wings 14, and tail 16. The belly 18 of the UAV 10 has a grappling hook 20 suspended therefrom for coupling with recovery equipment 30 like that shown in Figure 2. The hook 20 may be stowed during normal flight, as shown in Figure 1a. For recovery of the UAV 10, the hook 20 is deployed so as to hang below the UAV 10, as shown in Figure 1b. Figure 2 shows that the recovery equipment 30 comprises a horizontal arm 32 extending from a vertical mast 34 that may rotate about its vertical axis 36. Figures 3a and 3b show recovery of the UAV 10. The UAV 10 is flown towards the recovery equipment 30 such that the hook 20 snags on the arm 32 of the recovery equipment 30. This causes the mast 34 and arm 32 to rotate, and the UAV 10 is brought to a gradual stop as the arm 32 swings around.

Looking at the UAV 10 in more detail, Figure 1a shows that the grappling hook 20 may be suspended from a cable 22 attached to the belly 18 of the UAV 10 at three points. At one end, the hook 20 is attached to the belly 18 to keep the hook 20 in its stowed position. The hook 20 may be retained against the belly 18 using any convenient means, e.g. using a hinged catch 24. At its other end, the cable 22 is attached to a reel 26 that may pay out varying lengths of the cable 22. The reel 26 is located within a recess provided in the belly 18. The cable 22 also passes through a loop 28 that is attached to the belly 18 of the fuselage 12.

When the UAV 10 is to be recovered, the hook 20 is released from its deployed position, e.g. by releasing the hinged catch 22. The hook 20 swings free to be suspended from the fuselage 18 as shown in Figure 1b. The cable 22 is suspended from the loop 28 that attaches to the belly 18 of the fuselage 12. Conveniently, the loop 28 is positioned as closely as possible to the centre of gravity of the UAV 10, thereby aiding the stability of the UAV 10 when flying with the hook 20 deployed. However, the belly 18 of the fuselage 12 at the centre of gravity may not provide a hard point for attaching the cable 22, and thus may not be strong enough to withstand the forces experienced during recovery.

To address this, the reel 26 is secured to a hard point of the UAV fuselage 12, thereby providing a secure attachment of cable 22 to UAV 10. The cable attachment works on the principle of providing a second, frangible fastener. In this case, the frangible fastener is the loop 28 described above through which the cable 22 passes. When the hook 20 snags on the arm 32 of the recovery equipment 30, the cable 22 pulls against the loop 28 causing it to break, such that the greatest force is felt by the reel 26 at the hard point rather than at the weaker point on the belly 18 where the loop 28 is attached. In this way, the path of the load applied to the structure of the UAV 10 during recovery is well defined.

As mentioned above, the reel 26 may be used to pay out the cable 22. In this way, the length of the cable 22 below the UAV 10 may be adjusted. This allows the hook 20 to be stowed very close to the loop 28 if so desired as an adequate length of cable 22 may be paid out after the hook 20 is deployed. In fact, a third attachment point may not be needed to stow the hook 20: the reel 26 may be used to winch the hook 20 up to and against the belly 18 of the UAV 10.

Turning now to the recovery equipment 30, Figure 2 shows that it comprises the arm 32 that extends horizontally from the vertical mast 34. The arm 32 and mast 34 are joined by a connector 38 that fixes these parts together such that the arm 32 moves with the mast 34 as the mast 34 rotates. To allow for height adjustment, the mast 34 may be telescopic. In addition, the arm 32 may be telescopic to allow for its reach to be varied. This is useful in variable conditions as it allows a wider target to be provided. For example, the arm 32 may be fully extended in strongly gusting wind conditions where it is difficult to control the path of the UAV 10 with any precision.

The recovery equipment 30 is held in place by a base support 40. The nature of the base support 40 may vary according to the nature of the recovery equipment 30. If the location of the recovery equipment 30 is fixed, the base support 40 may be permanently fixed to the ground, e.g. the base support 40 may be a concrete support pad. If the recovery equipment 30 is portable for deployment in the field, the base support 40 may be arranged accordingly. For example, the base support 40 may comprise a series of extendable legs, and may include one or more spikes to be driven into the ground. Guy ropes may also be used to secure the mast 34, although care must be taken to ensure they do not foul recovery of the UAV 10.

The mast 34 is joined to a base support 40 by a rotatable joint (not shown) such that the mast 34 may rotate freely about its vertical axis 36. By freely, it is meant that the mast 34 is free to rotate when the hook 20 is snagged on the arm 32 (as the mast 34 and arm 32 are fixed together, the mast 34 rotates with the arm 32 once the hook 20 is snagged on the arm 32). The rotary joint may provide a braking force so as to bring rotation of the arm 32 to a controlled stop. The braking force may be set as desired. Alternatively, the rotatable joint may be provided between the mast 34 and arm 32 such that the arm 32 may rotate relative to a fixed mast 34.

The arm 32 is of a size suitable to co-operate with the grappling hook 20 of the UAV 10 of Figure 1. A cap 42 is provided on the distal end of the arm 32 to prevent the grappling hook 20 from sliding free from the arm 32 as the arm 32 rotates. A recovery operation will now be described with respect to Figures 3a and 3b.

The UAV 10 is flown towards the recovery equipment 30 in the direction shown by arrow 50. The grappling hook 20 is deployed, with a desired amount of cable 22 paid out by the reel 26 such that the hook 20 hangs a desired distance below the UAV 10. The UAV 10 is flown along a path that passes over the recovery equipment 30 such that the cable 22 strikes the arm 32. The grappling hook 20 should engage with the arm 32. (If, for any reason, the hook 20 does not engage with the arm 32, the UAV 10 will continue in flight and may attempt another approach). In most instances, the hook 20 will be snagged by the arm 32, and the force of the cable 22 and then the hook 20 striking the arm 32 will cause the arm 32 to rotate about the vertical axis 36 of the mast 34 as indicated by arrow 52. As the cable 22 is pulled taut, the frangible loop 28 breaks such that the greater force is then experienced by the reel 26 at its mounting to the hard point.

Rotation of the arm 32 causes a more gradual reduction in the speed of the UAV 10 as it spirals to a halt. Once, the arm 32 has stopped, the UAV 10 hangs suspended from the arm 32 as shown in Figure 3b. The cap 42 provided at the end of the arm 32 prevents the hook 20 from sliding from the arm 32 as it spins around during recovery of the UAV 10.

In the embodiment described above, the arm 32 is stationary as the UAV 10 is flown towards the recovery equipment 30. In alternative embodiments, the mast 34 and hence the arm 32 is rotated as the UAV 10 flies towards the recovery equipment 30. The rotation may be such that the arm 32 is moving in the same general direction as the UAV 10 or in the opposite direction to the UAV 10. In fact, the operator of the UAV 10 may select either direction simply by flying to one side or the other of the mast 34. Rotating the arm 32 in the opposite direction to the UAV 10 helps snag the hook 20 but causes a greater braking force to be felt by the UAV 10. Conversely, rotating the arm 32 in the same general direction as the UAV 10 reduces the braking force felt by the UAV 10, but makes snagging the hook 20 more difficult.

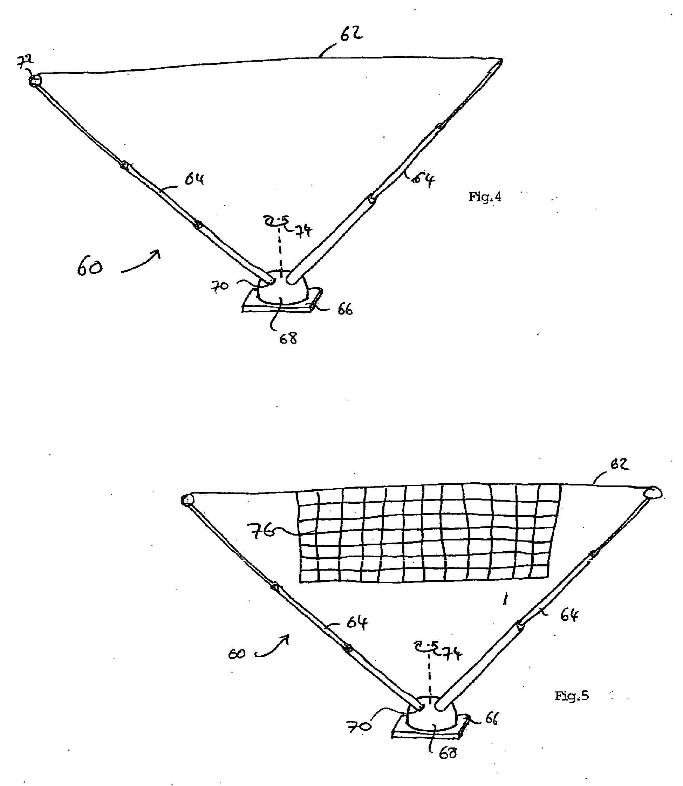

Figure 4 shows an alternative design of recovery equipment 60. The recovery equipment 60 comprises a line 62 strung between a pair of arms 64. The line 62 comprises the coupling means for snagging the hook 20 of the UAV 10. The recovery equipment 60 further comprises a support base 66, akin to those previously described. A rotatable hub 68 is mounted on the base 66 via a rotatable joint. The two like telescopic arms 66 extend from the hub 68, and are attached to the hub 68 by driven joints 70 that allow the arms 64 to be moved from a vertical position to the angled positions shown in Figure 4. The telescopic arms 64 may also be extended to a desired length. Thus, the recovery equipment 60 is well suited to a portable application as it may be transported in a compact configuration for later deployment in the field. Moreover, the telescopic arms 64 offer a great degree of flexibility to allow a line 62 of varying width and height to be provided. As described above, this is beneficial to account for changing wind conditions such that a small target line 62 may be provided where no wind is present and the UAV 10 may be flown precisely, or a long line 62 may be provided where wind conditions are problematic.

The line 62 is strung between the distal ends of the telescopic arms 64. The line 62 extends from a reel 72 provided on one the telescopic arms 64 and is attached to the other arm 64. As the telescopic arms 64 are extended, the line 62 is paid out from the reel 72. Conversely, the reel 72 takes up the slack in the cable 62 when the arms 64 are retracted. As described above, the grappling hook 20 of the UAV 10 of Figure 1 may be snagged by the line 62. Once snagged, the line 62 and the telescopic arms 64 may spin due to the rotatably mounted hub 68, as indicated by arrow 74.

Figure 5 shows recovery equipment 60 generally like that of Figure 4, so similar parts are denoted by similar reference numerals. A net 76 is suspended from the line 62. Unlike prior art systems that use a net, it is not intended to fly the UAV 10 into the net 76. Instead, the UAV 10 is flown over the net 76 such that the grappling hook 20 is dragged into the net 76. The hook 20 will then snag in the net 76, the arms 64 will spin and the UAV 110 will be brought to a gentle halt.

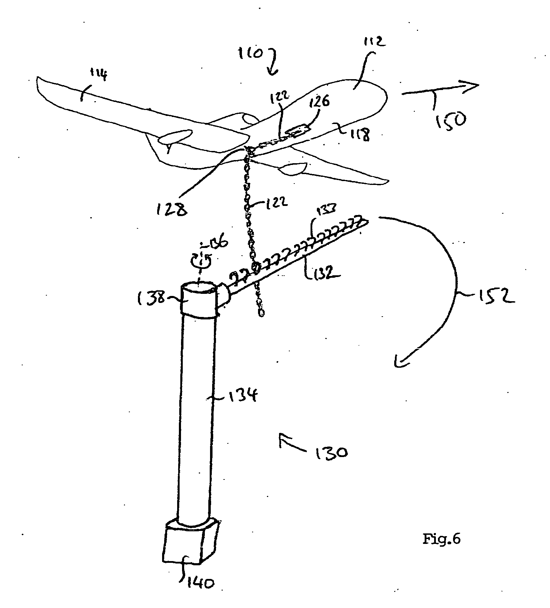

Figure 6 shows a further recovery system 130. The UAV 110 of Figure 6 broadly corresponds to that of Figure 1, but the grappling hook 20 and cable 22 have been replaced by a chain 122 that hangs beneath the belly 118 of the UAV 110. The recovery equipment 130 of Figure 6 is akin to that of Figure 2, but the upper side of the arm 132 is now provided with a series of hooks 133 for snagging the chain 122 hanging from the UAV 110. Thus, as the UAV 110 is flown over the recovery equipment 130, the chain 122 is caught by one or more of the hooks 133 and the arm 132 rotates to bring the UAV 110 to a halt.

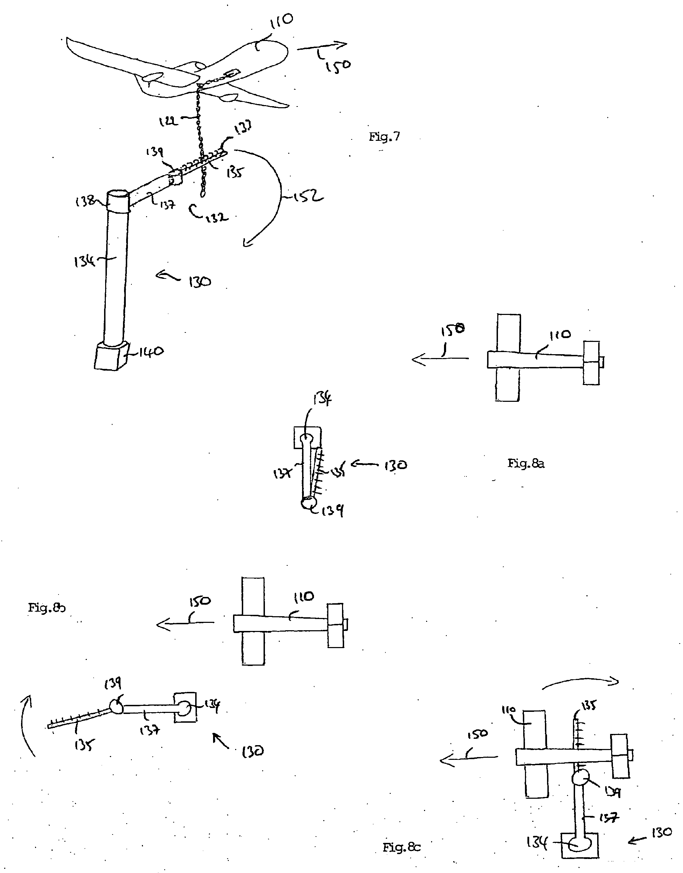

Figure 7 shows a recovery system 130 that is similar to the one shown in Figure 6. The same principle of providing the UAV 110 with a chain 122 that is snagged on a series of hooks 133 provided on an arm 132 is employed. However, the arm 132 now comprises two parts: the distal part 135 is provided with the series of hooks 133 and is joined to the proximal part 137 by a hinged elbow 139 that allows rotation about a vertical axis. The proximal part 137 of the arm is not provided with hooks 133 in this particular embodiment.

Figures 8a to 8c show this recovery system 130 in operation. Figure 8a shows the recovery equipment 130 in its stowed configuration. The distal part 135 of the arm 132 is folded back so as to rest against the proximal part 137 of the arm 132. The UAV 110 is approaching as indicated by arrow 150. In Figure 8b, the mast 134 is rotated such that the distal part 135 of the arm 132 is flung out. By the time that the arm 132 has rotated around to meet the UAV 110 as it flies overhead, the arm 132 is fully extended to be straight and the chain 122 hanging beneath the UAV 110 snags on the hooks 133 provided on the distal part 135 of the arm 132. Consequently, the UAV 110 is recovered.

The person skilled in the art will appreciate that modifications may be made to the above-described embodiments without departing from the scope of the invention defined by the appended claims.

While the above embodiments are described with respect to fixed-wing UAVs, the invention is not limited to recovery of just this class of UAVs. For example, rotorcraft could be recovered in this way. This may be useful where weather conditions make a conventional hover landing difficult to perform.

Moreover, the size of the UAV may vary from very small UAVs to very large UAVs. As will be clear, the present invention is better suited to small and medium-sized UAVs.

The coupling means hanging from the UAV may take one of several forms. Cables and chains have been described above, but ropes, lines, strips, belts and the like are suitable alternatives. Any manner of hook may be employed at the end of the cable or similar provided it can snag the recovery equipment. The material from which the coupling means is formed may also be varied. For example, the cable or similar may be made from elastic material to provide more give during recovery. The hook may be made of any suitably strong material. If a chain is used, it must be of sufficiently strong material to withstand the recovery process.

## Claims

1. A system for recovering an unmanned air vehicle from flight, comprising an unmanned air vehicle (10;110) and a recovery apparatus (30;60;130);
the air vehicle comprising first coupling means (20,22;122) anchored to the body of the air vehicle at a hard point and
the recovery apparatus comprising second coupling means (32;62;76;133) extending at an angle to the vertical that is complementary to the first coupling means thereby allowing for engagement between the air vehicle and the recovery apparatus via the first and second coupling means;
wherein the second coupling means is rotatably mounted so as to allow rotation about a substantially vertical axis (36) upon engagement of the air vehicle and the recovery apparatus; and **characterised in that**
the first coupling means is suspended beneath the air vehicle, and is further attached to the body of the air vehicle by a frangible member (28).

2. The system of claim 1, wherein the frangible member is provided on the body of the air vehicle at, or as close as possible to, the centre of gravity of the air vehicle.

3. The system of claim 1 or claim 2, wherein the second coupling means comprises any of an arm (32), a cable (22), a rope, a line, a chain or a net.

4. The system of any of claims 1 to 3, wherein the first coupling means provided on the air vehicle is a hook (20) suspended on a line.

5. The system of claim 1 or claim 2, wherein the second coupling means comprises a series of hooks (133) provided on an arm (132), and wherein the first coupling means is a chain (122).

6. The system of any preceding claim, wherein the second coupling means extends substantially horizontally.

7. The system of any preceding claim, wherein the recovery apparatus comprises retarding means operable to bring rotation of the arm smoothly to a stop.

8. The system of any preceding claim, wherein the second coupling means is arranged to be rotated about the substantially vertical axis prior to engagement with the aircraft thereby allowing the orientation of the second coupling means to be set relative to the approaching air vehicle.

9. A method of recovering an unmanned air vehicle (10;110) from flight, comprising:
flying the air vehicle towards recovery equipment (30;60;130), wherein the air vehicle has suspended therefrom first engagement means (20,22;122) anchored to the body of the air vehicle at a hard point and the recovery equipment includes second engagement means (32;62;76;133) that extend substantially horizontally;
flying the air vehicle over the recovery equipment such that the first engagement means engage with the second engagement means thereby causing the second engagement means to spin about a substantially vertical axis; and **characterised in that**
the first engagement means are further attached to the body of the air vehicle by a frangible member (28), and
by the frangible member breaking when the first engagement means engage with the second engagement means.

10. The method of claim 9, wherein the frangible member is provided on the body of the air vehicle at, or as close as possible to, the centre of gravity of the air vehicle such that when the air vehicle is flown towards the recovery equipment, the first engagement means are suspended from the centre of gravity of the aircraft.

11. The method of claim 9 or claim 10, further comprising rotating the second engagement means about the substantially vertical axis as the air vehicle is flown towards the recovery equipment.

## Patentansprüche

1. System zur Bergung eines unbenannten Luftfahrzeugs aus dem Flug heraus, wobei das System ein unbemanntes Luftfahrzeug (10; 110) und eine Bergungsvorrichtung (30; 60; 130) aufweist; das Luftfahrzeug eine erste Kopplungseinrichtung (20; 22; 122) aufweist, die an einem Zurrpunkt am Rumpf des Luftfahrzeugs verankert ist, und
die Bergungsvorrichtung eine zweite Kopplungseinrichtung (32; 62; 76; 133) aufweist, die sich zur Vertikalen unter einem zur ersten Kopplungseinrichtung komplementären Winkel erstreckt, um hierdurch über die erste und die zweite Kopplungseinrichtung eine Verbindung zwischen dem Luftfahrzeug und der Bergungsvorrichtung zu ermöglichen;
wobei die zweite Kopplungseinrichtung drehbar gelagert ist, um beim Verbinden von Luftfahrzeug und Bergungsvorrichtung eine Drehung um eine im Wesentlichen vertikale Achse (36) zu ermöglichen ;
und **dadurch gekennzeichnet ist, dass** die erste Kopplungsvorrichtung unterhalb des Luftfahrzeugs aufgehängt und an dem Rumpf des Luftfahrzeugs ferner mittels eines zerbrechlichen Elements (28) befestigt ist.

2. System nach Anspruch 1, worin sich das zerbrechliche Element am Rumpf des Luftfahrzeugs am oder so nahe wie möglich am Schwerpunkt des Luftfahrzeugs befindet.

3. System nach Anspruch 1 oder Anspruch 2, worin die zweite Kopplungseinrichtung einen Arm (32), ein Kabel (22), ein Seil, eine Leine, eine Kette oder ein Netz aufweist.

4. System nach einem der Ansprüche 1 bis 3, worin ein an einer Leine aufgehängter Haken (20) die sich die am Luftfahrzeug befindende erste Kopplungseinrichtung bildet.

5. System nach Anspruch 1 oder Anspruch 2, worin die zweite Kopplungseinrichtung eine Reihe von sich an einem Ausleger (132) befindenden Haken (133) aufweist, und worin die erste Kopplungseinrichtung von einer Kette (122) gebildet ist.

6. System nach einem der vorhergehenden Ansprüche, worin sich die zweite Kopplungseinrichtung im Wesentlichen horizontal erstreckt.

7. System nach einem der vorhergehenden Ansprüche, worin die Bergungsvorrichtung eine Bremseinrichtung aufweist, die zum sanften Abstoppen einer Drehung des Auslegers betrieben werden kann.

8. System nach einem der vorhergehenden Ansprüche, worin die zweite Kopplungseinrichtung so angeordnet ist, dass sie vor einer Verbindung mit dem Luftfahrzeug um die im Wesentlichen vertikale Achse gedreht werden kann, wodurch die Ausrichtung der zweiten Kopplungseinrichtung relativ zum näherkommenden Luftfahrzeug eingestellt werden kann.

9. Verfahren zum Bergen eines unbemannten Luftfahrzeugs (10; 110) aus dem Flug heraus, wobei das Verfahren Folgendes aufweist:
- Fliegen des Luftfahrzeugs in Richtung der Bergungseinrichtung (30; 60; 130), wobei das Luftfahrzeug eine von diesem abgehängte erste Verbindungseinrichtung (20, 22, 122) aufweist, die an einem Zurrpunkt am Rumpf des Luftfahrzeugs verankert ist, und die Bergungseinrichtung eine zweite Verbindungseinrichtung (32; 62; 76; 133) umfasst, die sich im Wesentlichen horizontal erstreckt;
- Überfliegen der Bergungseinrichtung mit dem Luftfahrzeug so, dass sich die erste Verbindungseinrichtung mit der zweiten Verbindungseinrichtung verbindet und hierdurch ein Drehen der zweiten Verbindungseinrichtung um eine im Wesentlichen vertikale Achse bewirkt; und
**dadurch gekennzeichnet ist, dass**
- die erste Verbindungseinrichtung am Rumpf des Luftfahrzeugs ferner mittels eines zerbrechlichen Elements (28) befestigt ist, und
- dadurch, dass das zerbrechliche Element bricht, wenn sich die erste Verbindungseinrichtung mit der zweiten Verbindungseinrichtung verbindet.

10. Verfahren nach Anspruch 9, worin sich das zerbrechliche Element am Rumpf des Luftfahrzeugs am oder so nahe wie möglich am Schwerpunkt des Luftfahrzeugs befindet, sodass die erste Verbindungseinrichtung beim Fliegen des Luftfahrzeugs in Richtung der Bergungseinrichtung vom Schwerpunkt des Luftfahrzeugs abgehängt ist.

11. Verfahren nach Anspruch 9 oder 10, das beim Fliegen des Luftfahrzeugs in Richtung der Bergungseinrichtung ferner ein Drehen der zweiten Verbindungseinrichtung um die im Wesentlichen vertikale Achse umfasst.

## Revendications

1. Système de récupération d'un véhicule aérien sans pilote d'un vol, comprenant un véhicule aérien sans pilote (10; 110) et un appareil de récupération (30; 60; 130);
le véhicule aérien comprenant des premiers moyens de couplage (20, 22; 122) ancrés au corps du véhicule aérien à un point dur, et
l'appareil de récupération comprenant des deuxièmes moyens de couplage (32; 62; 76; 133) s'étendant selon un angle à la verticale qui est complémentaire aux premiers moyens de couplage en permettant ainsi une mise en prise entre le véhicule aérien et l'appareil de récupération par les premiers et deuxièmes moyens de couplage;
où le deuxième moyen de couplage est monté à rotation de façon à permettre la rotation autour d'un axe sensiblement vertical (36) lors de la mise en prise du véhicule aérien et l'appareil de récupération; et **caractérisé en ce que**
le premier moyen de couplage est suspendu en dessous du véhicule aérien et est fixé en outre au corps du véhicule aérien par un élément frangible (28).

2. Système selon la revendication 1, où l'élément frangible est réalisé sur le corps du véhicule aérien à ou aussi près que possible du centre de gravité du véhicule aérien.

3. Système selon la revendication 1 ou la revendication 2, où le deuxième moyen de couplage comprend l'un quelconque d'un bras (32), d'un câble (22), d'une corde, d'une ligne, d'une chaîne ou d'un filet.

4. Système selon l'une quelconque des revendications 1 à 3, où le premier moyen de couplage réalisé sur le véhicule aérien est un crochet (20) suspendu à une ligne.

5. Système selon la revendication 1 ou la revendication 2, où le deuxième moyen de couplage comprend une série de crochets (133) réalisés sur un bras (132), et où le premier moyen de couplage est une chaîne (122).

6. Système selon l'une quelconque des revendications précédentes, où le deuxième moyen de couplage s'étend sensiblement horizontalement.

7. Système selon l'une quelconque des revendications précédentes, où l'appareil de récupération comprend un moyen de retardement actionnable pour amener la rotation du bras en douceur à un arrêt.

8. Système selon l'une quelconque des revendications précédentes, où le deuxième moyen de couplage est agencé pour être amené à tourner autour de l'axe sensiblement vertical avant la mise en prise avec l'aéronef en permettant ainsi que l'orientation du deuxième moyen de couplage soit réglée relativement au véhicule aérien qui approche.

9. Procédé de récupération d'un véhicule aérien sans pilote (10; 110) d'un vol, comprenant:
faire voler le véhicule aérien vers l'équipement de récupération (30; 60; 130), où le véhicule aérien présente en suspension de celui-ci des premiers moyens d'engagement (20, 22; 122) ancrés au corps du véhicule aérien à un point dur, et l'équipement de récupération comprend des deuxièmes moyens d'engagement (32; 62; 76; 133) qui s'étendent sensiblement horizontalement;
faire voler le véhicule aérien sur l'équipement de récupération de telle sorte que les premiers moyens d'engagement viennent en prise avec les deuxièmes moyens d'engagement en amenant ainsi les deuxièmes moyens d'engagement à tourner autour d'un axe sensiblement vertical; et **caractérisé en ce que**
les premiers moyens d'engagement sont en outre fixés au corps du véhicule aérien par un élément frangible (28), et
l'élément frangible casse lorsque les premiers moyens d'engagement viennent en prise avec les deuxièmes moyens d'engagement.

10. Procédé selon la revendication 9, où l'élément frangible est réalisé sur le corps du véhicule aérien à ou aussi près que possible du centre de gravité du véhicule aérien de telle sorte que lorsque le véhicule aérien est amené à voler vers l'équipement de récupération, les premiers moyens d'engagement sont suspendus du centre de gravité de l'aéronef.

11. Procédé selon la revendication 9 ou la revendication 10, comprenant en outre la rotation des deuxièmes moyens d'engagement autour de l'axe sensiblement vertical lorsque le véhicule aérien est amené à voler vers l'équipement de récupération.
